# EUROPÄISCHE PATENTSCHRIFT

(11) **EP 0 470 533 B1**
(45) Veröffentlichungstag und Bekanntmachung des Hinweises auf die Patenterteilung: **15.02.1995**
(21) Anmeldenummer: 91113078.9
(22) Anmeldetag: 03.08.1991
(51) Int. Cl.: F16C 17/08

(54) **Gleitlager zur Aufnahme von radialen und axialen Lagerkräften und Verfahren zu dessen Herstellung**
Sliding bearing for radial and axial loads and method of making the same
Palier lisse pour charges radiales et axiales et son procédé de fabrication

(30) Priorität: 10.08.1990 DE 4025381
(43) Veröffentlichungstag der Anmeldung: 12.02.1992
(73) Patentinhaber: Stehr, Werner, D-72160 Horb (DE)
(72) Erfinder: Stehr, Werner, D-72160 Horb (DE)
(74) Vertreter: Ott, Elmar, Dipl.-Ing.

(56) Entgegenhaltungen:
- DE-A- 2 952 241
- DE-A- 3 347 096
- NL-C- 48 366
- US-A- 3 781 071
- S. Hildebrand, Feinmechanische Bauelemente, Carl Hanser Verlag, München-Wien, 1978, Seiten 316 und 317

## Beschreibung

Die Erfindung betrifft ein Gleitlager, das als Kunststoff-Spritzgußteil hergestellt ist, zur Aufnahme von radialen und axialen Lagerkräften gemäß der Gattung des Anspruchs 1 sowie ein Verfahren zur Herstellung eines Gleitlagers als Kunststoff-Spritzgußteil.

Es sind kombinierte Axial-Radialgleitlager bekannt, bei denen ein Lagerzapfen in einer Lagerschale radial sowie zumindest in einer Achsrichtung gehalten ist. Ein derartiges Gleitlager ist in der DE-OS 26 18 542 beschrieben. Bei diesem bekannten Gleitlager sind die Lagerflächen mit einem kegelstumpfförmigen Abschnitt ausgebildet, der exakt an die Form des Lagerzapfens angepaßt sein muß. Toleranzen bei der Fertigung sind hier sehr problematisch. Außerdem ist eine permanente Schmierung der Lagerflächen zumindest mit einfachen Mitteln nicht möglich, da ein Schmiermittelreservoir im Bereich der Lagerflächen nicht vorgesehen ist. Eine Schmiermittelbildung zur Erzielung einer hydrodynamischen Reibung im Bereich der Lagerflächen ist gerade bei feinmechanischen Anwendungen besonders vorteilhaft, um die Reibkräfte und den Lagerverschleiß äußerst gering halten zu können. Mit dem bekannten Axial-Radiallager ist dies nicht erreichbar.

Ein gattunggemäßes Lager, insbesondere Spur- und Radiallager für die Abstützung von Wellen als Spritzteil ist aus der DE-A-3 347 096 bekannt. Aus der US-A-3 781 071 ist eine Lageranordnung bekannt, die einen drehbaren Schaft mit einer halbkugelförmigen Spitze aufweist, die in einem pyramidenförmigen Sitz gelagert ist. Ein elastisches hydrodynamisches Schmiermittel besorgt einen dünnen Film zwischen den Lagerflächen. Dazu ist ein Gehäuse vorgesehen, das ein Teil der Welle, das Wellenende sowie den Lagersitz umschließt und in seinem inneren mit Öl gefüllt ist.

Die NL-C 48 366 offenbart ein Gleitlager zur Aufnahme von radialen und axialen Lagerkräften, das zur Lagerung eines Lagerzapfens oder dergleichen geeignet ist, wobei die Lagerflächen von den Seitenflächen eines Abschnitts eines Pyramidenhohlraums mit wenigstens drei Seitenflächen gebildet sind, an denen der Lagerzapfen mit seinem halbkugelförmigen Ende anliegt. Der Pyramidenhohlraum ist dabei so ausgestaltet, daß der Lagerzapfen maximal bis zur Hälfte in den Pyramidenhohlraum hineinragt. Die Anlagepunkte des Lagerzapfens in dem Pyramidenhohlraum befinden sich daher am oberen Ende des Pyramidenhohlraums.

Aus der Druckschrift Prof. Dr.-Ing. Siegfried Hildebrand, Feinmechanische Bauelemente, Carl Hanser Verlag München/Wien, 1978, Seiten 316 und 317 ist ein Gleitlager als Kugelzapfenlager bekannt, bei dem die Lagerflächen von den Innenseiten eines Halbkugel-, Zylinder- oder Kegelhohlraums gebildet sind, wobei der Hohlraum als Tasche bzw. Pfanne ausgeführt ist.

Der Erfindung liegt die Aufgabe zugrunde, ein Gleitlager zur Aufnahme von radialen und axialen Lagerkräften für einen Lagerzapfen oder dergleichen zu schaffen, das für feinmechanische Anwendungen geeignet ist.

Die Lösung dieser Aufgabe erhält man mit den Merkmalen des Anspruchs 1 sowie mit einem Verfahren zur Herstellung eines Gleitlagers gemäß Anspruch 4. Die Lagerflächen, an denen das Ende eines Lagerzapfens oder einer Achse anliegt, werden von beispielsweise drei Innenflächen eines Pyramidenhohlraums mit drei Seitenflächen gebildet. Die Spitze des Pyramidenhohlraums kann ausreichend Schmiermittel aufnehmen, so daß die Lagerflächen, an denen der Lagerzapfen einer Welle oder die Welle selbst dreipunktförmig anliegt, ständig durch die Rotation des Lagerzapfens geschmiert werden. Es entsteht im Bereich der Lagerstellen ein Schmierfilm, da durch die Rotation des Lagerzapfens Schmiermittel ständig zu den Lagerpunkten befördert wird. Die dadurch sich ergebende hydrodynamische Reibung ist äußerst gering, so daß eine optimale und sehr verschleißfreie Lagerung erreicht wird, was gerade in feinwerktechnischen Anwendungen von sehr großer Bedeutung ist. Das Ende des Lagerzapfens ist an den zueinander geneigten Innenflächen des Pyramidenhohlraums radial allseitig gelagert, während axiale Kräfte in einer Richtung aufgenommen werden können. Durch die Dreipunktlagerung erhält man eine exakt definierte Lage für den Wellenmittelpunkt.

Das im Gleitlager befindliche Schmiermittel hat eine Füllhöhe, die die Anlagepunkte des Lagerzapfens übersteigt. Der im Pyramidenhohlraum mit Schmiermittel ausgefüllte Freiraum dient dabei als Schmiermittelreservoir, wodurch für ein derartiges Gleitlager eine sehr große Lebensdauer erreichbar ist.

Um eine hohe Stabilität für das aus Kunststoff hergestellte Gleitlager zu erhalten, ist das erfindungsgemäße Verfahren zur Herstellung eines Gleitlagers dadurch gekennzeichnet, daß die Fließrichtung beim Spritzvorgang auf die Pyramidenspitze eines den Pyramidenhohlraum bildenden Pyramidenformkörper gerichtet ist, so daß der Kunststoff von der Pyramidenspitze ausgehend die Seitenflächen des Pyramidenkörpers umströmt. Auf diese Weise wird eine Schwächung des Kunststoffs im Bereich der Pyramidenspitze vermieden, die dann jedoch entstehen würde, wenn beim Spritzvorgang die Strömungsrichtung entgegengesetzt ausgerichtet wäre. Dann würde der Kunststoff beim Spritzvorgang an den Seitenwänden entlang zur Spitze strömen und sich dort verbinden, wobei eine verhältnismäßig wenig belastbare Bindenaht im Bereich der Pyramidenspitze entstehen würde. Durch das erfindungsgemäße Verfahren wird dieser Nachteil vermieden, so daß es möglich ist, Polymere zu verwenden, die keine hohe Bindenahtfestigkeit haben.

Das erfindungsgemäße Gleitlager, welches einen mehrflächigen Pyramidenhohlraum zur Bildung der Lagerflächen besitzt, hat relativ große Freiräume, die als Schmiermitteldepot dienen. Außerdem können Verschleißpartikel sich in den Freiräumen ablagern, so daß diese Partikel von den Lagerflächen ferngehalten werden und damit die Lagerung nicht negativ beeinflussen können.

Die Erfindung wird nachfolgend anhand der Zeichnung näher erläutert.

Es zeigen:
Figur 1 einen Kunststoffkörper mit einem erfindungsgemäßen Pyramidenhohlraum als Axial-Radiallager für einen Lagerzapfen oder dergleichen,
Figur 2 eine Draufsicht auf den in Figur 1 dargestellten Körper mit hohlpyramidenförmigem Gleitlager,
Figur 3 die Seitenansicht eines erfindungsgemäßen Gleitlagers mit eingesetztem Lagerzapfen,
Figur 4 eine im Prinzip dargestellte Vorrichtung zur Herstellung des erfindungsgemäßen Gleitlagers,
Figur 5 den Schnitt AB gemäß Figur 6 einer Ausführungsform mit zusätzlichen radial wirkenden Lagerflächen und
Figur 6 die Draufsicht der in Figur 5 dargestellten Ausführungsform.

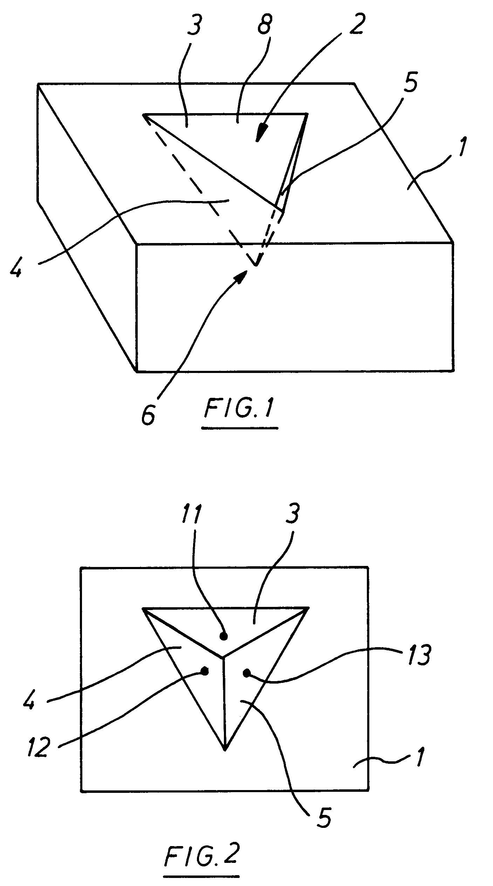

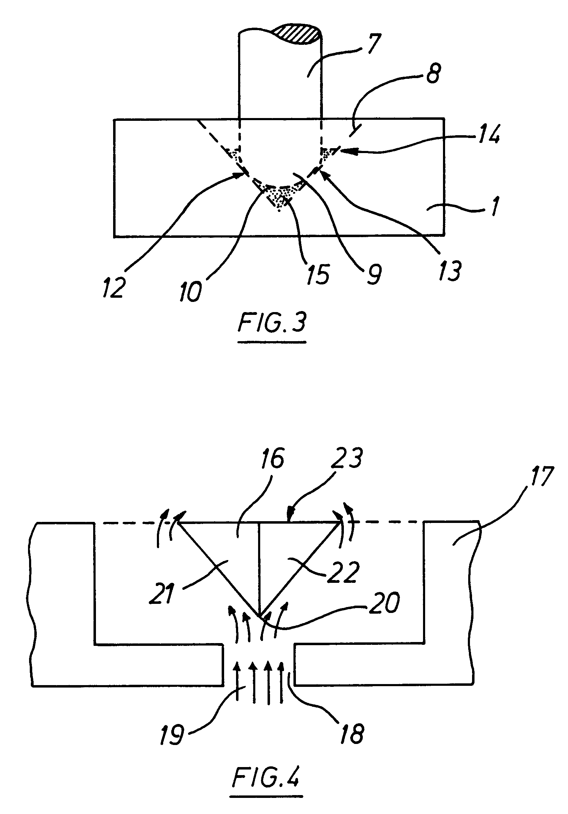

Der in Figur 1 dargestellte Kunststoffkörper 1 besitzt einen Pyramidenhohlraum 2, dessen drei Seitenflächen 3, 4, 5 die Lagerflächen eines Gleitlagers bilden, welches zur Aufnahme von radialen und axialen Lagerkräften geeignet ist. Die Spitze 6 des Pyramidenhohlraums 2 ragt nach unten in den Kunststoffkörper 1. Ein zu lagernder Lagerzapfen 7, der in Figur 3 dargestellt ist, wird von oben in das als Pyramidenhohlraum ausgebildete Gleitlager 8 eingesetzt.

Ist der Lagerzapfen 7 an seinem Ende 9 in Form einer Halbkugel 10 abgerundet, so ergeben sich die in Figur 2 ersichtlichen Lagerpunkte 11, 12, 13 an den Lagerflächen 3, 4, 5.

In Figur 3 ist die Füllhöhe 14 eines im Gleitlager 8 befindlichen Schmiermittels 15 angegeben. Durch Rotation des Lagerzapfens 7 wird ständig Schmiermittel 15 im Bereich der Lagerpunkte 11 bis 13 zwischen die Kugelfläche 10 und die Lagerflächen 3 bis 5 befördert, so daß der Lagerzapfen 7 hydrodynamisch im Gleitlager 8 gelagert ist.

In Figur 4 ist ein Pyramidenformkörper 16 und eine äußere Begrenzung 17 einer Spritzform zur Verdeutlichung des Herstellungsprinzips dargestellt. In diesem Zusammenhang wird darauf hingewiesen, daß das Werkzeug in Figur 4 nicht vollständig eingezeichnet ist.

Durch eine im Werkzeug befindliche Öffnung 18 wird in Pfeilrichtung 19 der Kunststoff eingesprizt, so daß sich dieser entsprechend den weiteren Richtungspfeilen entlang dem Pyramidenformkörper 16 verteilt. Dabei ist besonders wichtig, daß der Kunststoff von der Spitze 20 ausgehend zu den Seitenwänden 21, 22 und der nicht sichtbaren dritten Seitenwand 23 gelangt und diese nach oben umströmt.

Es sei noch erwähnt, daß der Lagerzapfen 7 in Figur 3 anstelle einer kugelförmigen Lagerfläche auch eine kegelstumpfförmige Lagerfläche aufweisen kann, so daß eine linienförmige Anlage an den drei Seitenflächen des Pyramidenhohlraums erreicht wird.

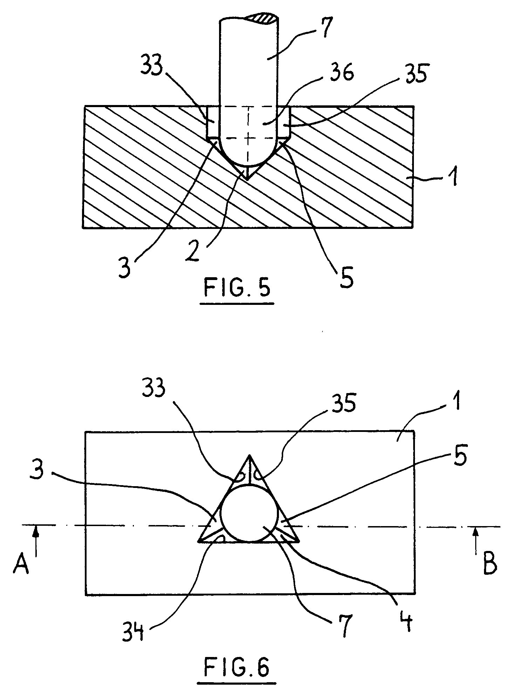

In Figur 5 ist ein Axial-Radiallager im Schnitt gemäß der Schnittlinie AB (Figur 6) gezeigt. Bei dieser Ausführungsform schließen sich oben an die geneigten Lagerflächen des Pyramidenhohlraums 2 senkrechte Lagerseitenflächen 33 bis 35 an, an denen der Lagerzapfen 7 mit seiner Umfangsfläche 36 linienförmig anliegt. Die Lagerseitenflächen 33 bis 35 bilden somit ein zusätzliches Radiallager, so daß das kombinierte Axial-Radiallager gemäß Figur 5 und Figur 6 auch größere radiale Lagerkräfte aufnehmen kann.

In der Draufsicht von Figur 6 ist insbesondere die linienförmige Anlage des Lagerzapfens 7 an den Lagerseitenflächen 33, 34, 35 ersichtlich. Auf eine Darstellung des Schmiermittels wurde der Übersichtlichkeit wegen in den Figuren 5 und 6 verzichtet.

## Patentansprüche

1. Gleitlager, das als Kunststoff-Spritzgußteil hergestellt ist, zur Aufnahme von radialen und axialen Lagerkräften, das zur Lagerung eines Lagerzapfens oder dergleichen geeignet ist, **dadurch gekennzeichnet**, daß die Lagerflächen (3, 4, 5) von den Innenflächen einer Ausnehmung in Form eines Pyramidenhohlraums (2) mit wenigstens drei Seitenflächen gebildet sind, an denen der Lagerzapfen (7) mit seinem halbkugelförmigen oder kegelstumpfförmigen Ende (9) anlegbar ist, und daß sich in dem Pyramidenhohlraum (2) ein Schmiermittel (15) befindet, dessen Füllhöhe (14) die Anlagepunkte (11, 12, 13) des Lagerzapfens (7) übersteigt.

2. Gleitlager nach Anspruch 1, **dadurch gekennzeichnet**, daß das Gleitlager (8) als feinwerktechnisches Lager ausgebildet ist.

3. Gleitlager nach Anspruch 1 oder 2, **dadurch gekennzeichnet**, daß sich an die Seitenflächen (3 bis 5) des Pyramidenhohlraums (2) parallel zu dem im Gleitlager gelagerten Lagerzapfen (7) verlaufende Lagerseitenflächen (33 bis 35) anschließen, an denen der Lagerzapfen (7) mit seiner Umfangsfläche (36) linienförmig anliegt.

4. Verfahren zur Herstellung eines Gleitlagers zur Aufnahme von radialen und axialen Lagerkräften, das zur Lagerung eines Lagerzapfens oder dergleichen geeignet ist, als Kunststoff-Spritzgußteil, wobei das Gleitlager als Kunstoffkörper ausgebildet ist, bei dem die Lagerflächen von den Innenflächen einer Ausnehmung in Form eines Pyramidenhohlraums mit wenigstens drei Seitenflächen gebildet sind, an denen der Lagerzapfen mit seinem halbkugelförmigen oder kegelstumpfförmigen Ende anlegbar ist, und wobei beim Spritzvorgang die Fließrichtung (20) auf die Pyramidenspitze eines den Pyramidenhohlraum (2) bildenden Pyramidenkörpers (16) gerichtet ist, so daß der Kunstoff von der Pyramidenspitze ausgehend die Seitenflächen (21, 22, 23) des Pyramidenkörpers (16) umströmt.

## Claims

1. Friction bearing, which is manufactured as a plastic injection moulding for absorbing radial and axial bearing forces and which is suitable for supporting a journal or the like, characterized in that the bearing surfaces (3, 4, 5) are formed by the inner faces of a recess in the form of a pyramidal cavity (2) with at least three side faces, against which can bear the journal (7) with a hemispherical or frustum-shaped end (9) and in the pyramidal cavity (2) is located a lubricant (15), whose fill height (14) exceeds the bearing points (11, 12, 13) of the journal (7).

2. Friction bearing according to claim 1, characterized in that the friction bearing (8) is constructed as a precision bearing.

3. Friction bearing according to claim 1 or 2, characterized in that to the side faces (3 to 5) of the pyramidal cavity (2) are connected bearing side faces (33 to 35) running parallel to the journal (7) supported in the friction bearing and against which linearly bears by means of its circumferential surface (36) the said journal (7).

4. Method for the manufacture of a friction bearing for absorbing radial and axial bearing forces and which is suitable for supporting a journal or the like in the form of a plastic injection moulding, the friction bearing being constructed as a plastic body, in which the bearing surfaces are formed by the inner faces of a recess in the form of a pyramidal cavity with at least three side faces, against which can bear the journal with its hemispherical or frustum-shaped end and in which during the injection moulding process the flow direction (20) is directed onto the pyramidal tip of a pyramid body (16) forming the pyramidal cavity (2), so that, emanating from the pyramidal point the plastic flows round the side faces (21, 22, 23) of the pyramid body (16).

## Revendications

1. Palier lisse, qui est fabriqué sous la forme d'une pièce en matière plastique moulée par injection, destinée à supporter des forces radiales et axiales et qui convient pour supporter un tourillon ou analogue, caractérisé en ce que les surfaces de palier (3,4,5) sont formées par les surfaces intérieures d'un évidement aménagé sous la forme d'une cavité pyramidale (2) comportant au moins trois surfaces latérales et sur lesquelles le tourillon (7) peut s'appuyer par son extrémité (9) de forme hémisphérique ou de forme tronconique, et que dans la cavité pyramidale (2) est disposé un lubrifiant (15), dont la hauteur de remplissage (14) dépasse les points d'application (11,12,13) du tourillon (7).

2. Palier lisse selon la revendication 1, caractérisé en ce que le palier lisse (8) et agencé sous la forme d'un palier réalisé selon une technique de précision.

3. Palier lisse selon la revendication 1 ou 2, caractérisé en ce qu'aux surfaces latérales (3 à 5) de la cavité pyramidale (2) se raccordent des surfaces latérales (33 ou 35) du palier, qui sont parallèles au tourillon (7) monté dans le palier lisse et sur lesquelles le tourillon (7) s'applique par sa surface circonférentielle (36) selon un contact linéaire.

4. Procédé pour fabriquer un palier lisse sous la forme d'une pièce en matière plastique moulée par injection, le palier lisse étant réalisé sous la forme d'un corps en matière plastique, et dans lequel les surfaces du palier sont formées par les surfaces intérieures d'un évidement en forme de cavité pyramidale comportant au moins trois surfaces latérales, contre lesquelles le tourillon peut s'appliquer par son extrémité hémisphérique ou de forme tronconique, et selon lequel lors de l'opération de moulage par injection, la direction de circulation (20) est dirivée vers la pointe d'un corps pyramidal (16) constituant la cavité pyramidale (2) de sorte que la matière plastique circule autour des surfaces latérales (21,22,23) du corps pyramidal (16) à partir de la pointe de ce corps.
